# EUROPÄISCHE PATENTSCHRIFT

(11) **EP 3 837 453 B1**
(45) Veröffentlichungstag und Bekanntmachung des Hinweises auf die Patenterteilung: **29.06.2022**
(21) Anmeldenummer: 19778878.9
(22) Anmeldetag: 18.09.2019
(51) Int. Cl.: F16F 7/10, F16F 7/116

(54) **IN MEHREREN ORIENTIERUNGEN EINSETZBARER AKTIVER SCHWINGUNGSDÄMPFER**
ACTIVE VIBRATION DAMPER INSERTABLE IN MULTIPLE ORIENTATIONS
AMORTISSEUR DE VIBRATIONS ACTIF POUVANT ÊTRE INSÉRÉ DANS DES ORIENTATIONS MULTIPLES

(30) Priorität: 18.10.2018 EP 18201240
(43) Veröffentlichungstag der Anmeldung: 23.06.2021
(73) Patentinhaber: Siemens Aktiengesellschaft, 80333 München (DE)
(72) Erfinder: BRETSCHNEIDER, Jochen, 88696 Owingen (DE); FRITSCH, Christoph, 96178 Pommersfelden (DE); SCHÜR, Torsten, 91058 Erlangen (DE); STOIBER, Dietmar, 90763 Fürth (DE)
(86) Internationale Anmeldenummer: PCT/EP2019/074944
(87) Internationale Veröffentlichungsnummer: WO 2020/078648

(56) Entgegenhaltungen:
- WO-A1-2017/140760
- US-A- 5 196 745
- US-A1- 2009 122 284

## Beschreibung

Die vorliegende Erfindung geht aus von einem aktiven Schwingungsdämpfer,
- wobei der Schwingungsdämpfer ein im Wesentlichen quaderförmiges Gehäuse aufweist, so dass das Gehäuse, wenn es mit einer unteren Außenwand auf dem Boden aufsteht, zusätzlich eine obere Außenwand, eine vordere und eine hintere Außenwand sowie eine linke und eine rechte Außenwand aufweist,
- wobei zumindest an der Innenseite der unteren Außenwand ein Primärteil eines elektrischen Linearantriebs befestigt ist,
- wobei das Primärteil auf ein oberhalb des Primärteils angeordnetes Sekundärteil des elektrischen Linearantriebs wirkt,
- wobei das Sekundärteil über ein linkes und ein rechtes, an der Innenseite der oberen Außenwand befestigtes Halteelement beweglich gehalten ist, so dass das Sekundärteil bei entsprechender Beaufschlagung des Primärteils in links-rechts-Richtung im Wesentlichen linear verschiebbar ist,
- wobei in die vordere Außenwand und/oder in die hintere Außenwand auf Höhe des Sekundärteils eine Anzahl von Aufnahmen für Permanentmagnete und weiterhin eine Aufnahme für ein magnetisches Rückschlussjoch eingebracht sind,
- wobei die Aufnahmen für die Permanentmagnete und die Aufnahme für das magnetische Rückschlussjoch in die Außenseite der vorderen Außenwand und/oder in die Außenseite der hinteren Außenwand eingebracht sind.

Aus der WO 2017/140 760 A1 ist ein aktiver Schwingungsdämpfer bekannt, der ein im Wesentlichen quaderförmiges Gehäuse aufzuweisen scheint, so dass das Gehäuse, wenn es mit einer unteren Außenwand auf dem Boden aufsteht, zusätzlich eine obere Außenwand, eine vordere und eine hintere Außenwand sowie eine linke und eine rechte Außenwand aufzuweisen scheint. An der Innenseite der unteren Außenwand ist ein Primärteil eines elektrischen Linearantriebs befestigt. Das Primärteil wirkt auf ein oberhalb des Primärteils angeordnetes Sekundärteil des elektrischen Linearantriebs. Das Sekundärteil ist über ein linkes und ein rechtes, an der Innenseite der oberen Außenwand befestigtes Halteelement beweglich gehalten, so dass das Sekundärteil bei entsprechender Beaufschlagung des Primärteils in links-rechts-Richtung im Wesentlichen linear verschiebbar ist. In die vordere und die hintere Außenwand sind eine Anzahl von Durchbrüchen eingebracht, in welche sogenannte Nutsteine eingesetzt werden können.

Aktive Schwingungsdämpfer werden bei verschiedenen Maschinen eingesetzt, um beim Betrieb der jeweiligen Maschine auftretende Schwingungen zu dämpfen. Der jeweilige aktive Schwingungsdämpfer dient also nicht dem eigentlichen Betrieb der Maschine, sondern lediglich dazu, eine beim Betrieb der Maschine auftretende unerwünschte Nebenwirkung - nämlich die Schwingungen und Vibrationen - zu reduzieren und nach Möglichkeit sogar zu eliminieren.

Der Schwingungsdämpfer arbeitet sehr gut. Er ist jedoch nur unter wenigen Orientierungen montierbar. Insbesondere ist es zwar ohne weiteres möglich, den Schwingungsdämpfer derart zu montieren, dass die obenstehend als untere Außenwand bezeichnete Außenwand nach unten zeigt. In diesem Fall sind keinerlei weitergehende Maßnahmen erforderlich, um den Schwingungsdämpfer ordnungsgemäß zu betreiben. Aufgrund der von dem Primärteil auf das Sekundärteil ausgeübten Anziehungskraft ist es weiterhin oftmals auch ohne weiteres möglich, den Schwingungsdämpfer derart zu montieren, dass die obenstehend als obere Außenwand bezeichnete Außenwand nach unten zeigt. Dies ist insbesondere dann möglich, wenn die von dem Primärteil auf das Sekundärteil ausgeübte Anziehungskraft die auf das Sekundärteil ausgeübte Gewichtskraft übersteigt. Weiterhin ist es möglich, den Schwingungsdämpfer derart zu montieren, dass eine der obenstehend als linke und rechte Außenwand bezeichneten Außenwände nach unten zeigt. In diesem Fall ist es erforderlich, durch entsprechende Ansteuerung des Primärteils die auf das Sekundärteil wirkende Gewichtskraft auszugleichen.

Es ist jedoch nicht möglich, den Schwingungsdämpfer derart zu montieren, dass eine der obenstehend als vordere und hintere Außenwand bezeichneten Außenwände nach unten zeigt. In diesem Fall wirken aufgrund der auf das Sekundärteil wirkenden Gewichtskraft auf die Halteelemente hohe Biegebeanspruchungen, welche die Halteelemente sofort oder zumindest sehr schnell zerstören würden. Der aktive Schwingungsdämpfer muss daher unter Umständen derart montiert werden, dass er von der Maschine, deren Schwingung er dämpfen soll, deutlich absteht. Er kann hingegen nicht derart montiert werden, dass er sich quasi an die Maschine anschmiegt.

Die Aufgabe der vorliegenden Erfindung besteht darin, einen aktiven Schwingungsdämpfer der eingangs genannten Art derart weiterzuentwickeln, dass er auch derart montiert werden kann, dass die vordere und/oder die hintere Außenwand nach unten zeigt.

Die Aufgabe wird durch einen aktiven Schwingungsdämpfer mit den Merkmalen des Anspruchs 1 gelöst. Vorteilhafte Ausgestaltungen des aktiven Schwingungsdämpfers sind Gegenstand der abhängigen Ansprüche 2 bis 4.

Erfindungsgemäß wird ein aktiver Schwingungsdämpfer der eingangs genannten Art dadurch ausgestaltet, dass die Aufnahmen für die Permanentmagnete topfartig ausgebildet sind, insbesondere als Topfbohrungen, so dass die entsprechende Außenwand trotz der Aufnahmen für die Permanentmagnete als geschlossene Außenwand erhalten bleibt.

Es ist nicht erforderlich und in vielen Fällen sogar nicht sinnvoll, in die Aufnahmen stets und in jedem Fall die Permanentmagnete und das Rückschlussjoch tatsächlich einzubringen. Denn insbesondere in den Fällen, in denen die untere Außenwand, die linke Außenwand oder die rechte Außenwand und gegebenenfalls auch die obere Außenwand nach unten zeigt, kann es sogar kontraproduktiv sein, wenn die Permanentmagnete und das Rückschlussjoch vorhanden sind. Es muss jedoch möglich sein, die Permanentmagnete und das Rückschlussjoch bei Bedarf montieren zu können. Aufgrund der Einbringung der Aufnahmen in die Außenseite der vorderen und/oder der hinteren Außenwand sind die Aufnahmen ohne Öffnung des Gehäuses des Schwingungsdämpfers als Ganzes von außen zugänglich. Aufgrund der Ausbildung als Topfbohrungen, so dass die entsprechenden Außenwände als geschlossene Außenwände erhalten bleiben, sind eigene Maßnahmen zur Abdichtung, beispielsweise zum Schutz vor Eindringen von Staub oder Wasser nicht erforderlich.

Vorzugsweise ist die Ausnehmung für das Rückschlussjoch von innen nach außen gesehen außerhalb der Aufnahmen für die Permanentmagnete angeordnet. Dadurch ergibt sich eine besonders günstige Anordnung des Rückschlussjoches.

Sofern eine entsprechende Montage des aktiven Schwingungsdämpfers erfolgen soll, sind die Permanentmagnete und das Rückschlussjoch in die jeweiligen Aufnahmen der vorderen oder der hinteren Seitenwand eingebracht. In diesem Fall wird vorzugsweise eine resultierende Magnetfeldstärke des von dem Sekundärteil, den Permanentmagneten und dem Rückschlussjoch gebildeten Magnetkreises durch das Rückschlussjoch begrenzt. Dadurch kann insbesondere erreicht werden, dass die auf das Sekundärteil wirkende, die Gewichtskraft kompensierende magnetische Anziehungskraft des Magnetkreises sowohl unabhängig von der Stärke der Permanentmagnete als auch unabhängig von der Größe des unvermeidbar vorhandenen magnetischen Luftspalts ist.

Um die Begrenzung durch das Rückschlussjoch auf besonders einfache Weise zu erreichen, weist das Rückschlussjoch vorzugsweise einen Bereich mit einem gegenüber dem verbleibenden Rückschlussjoch reduzierten Querschnitt auf. In diesem Fall begrenzt der reduzierte Querschnitt die resultierende Magnetfeldstärke.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine perspektivische Darstellung eines aktiven Schwingungsdämpfers von außen,
- FIG 2: den Schwingungsdämpfer von FIG 1 ohne vordere und hintere Außenwand,
- FIG 3: einen Schnitt durch den Schwingungsdämpfer von FIG 1,
- FIG 4: eine Draufsicht auf die vordere Außenwand aus einer Richtung IV,
- FIG 5: den Schwingungsdämpfer von FIG 3 ohne eingebrachten Permanentmagnete und ohne eingebrachtes Rückschlussjoch und
- FIG 6: eine Draufsicht von außen auf die vordere Außenwand des Schwingungsdämpfers von FIG 5 aus einer Richtung VI.

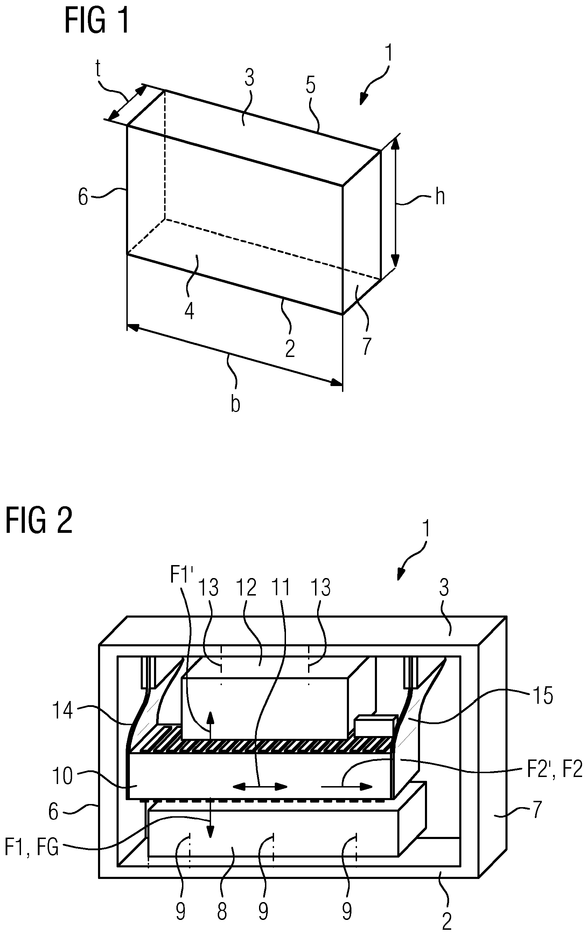

Entsprechend der Darstellung in FIG 1 weist ein aktiver Schwingungsdämpfer ein Gehäuse 1 auf. Das Gehäuse 1 ist entsprechend der Darstellung in FIG 1 im Wesentlichen quaderförmig. Es umfasst eine untere Außenwand 2. Die anderen Außenwände 3 bis 7 des Gehäuses 1 werden dementsprechend als obere Außenwand 3, vordere und eine hintere Außenwand 4, 5 sowie als linke und eine rechte Außenwand 6 und 7 bezeichnet. Diese Bezeichnungen dienen jedoch lediglich der Unterscheidung der verschiedenen Außenwände 2 bis 7 des Gehäuses 1 voneinander. Angaben wie "oben" usw. beziehen sich, sofern sie auf Elemente des Schwingungsdämpfers bezogen sind, auf diese Festlegung. Die Außenwände 2 bis 7 bestehen in der Regel aus einem diamagnetischen Metall, beispielsweise Aluminium.

Optimal ist es, wenn der Schwingungsdämpfer derart an eine Maschine montiert werden kann, dass die untere Außenwand 2 nach unten zeigt. Es ist ebenso möglich, dass der Schwingungsdämpfer gedreht und/oder gekippt wird, so dass beispielsweise die rechte Außenwand 7 nach unten zeigt. "Unten" ist in diesem Zusammenhang die Richtung, in welche die Schwerkraft gerichtet ist

Nachfolgend werden verschiedentlich Abmessungen und Dimensionierung genannt. Die Abmessungen und Dimensionierungen sind auf eine konkrete mögliche Ausgestaltung des Schwingungsdämpfers bezogen. Sie dienen lediglich der Veranschaulichung der vorliegenden Erfindung, nicht aber deren Beschränkung auf derartige Abmessungen und Dimensionierung.

Beispielsweise kann das Gehäuse 1 eine Breite b von ca. 30 cm, eine Höhe h von ca. 20 cm und eine Tiefe t von ca. 10 cm aufweisen. Eine Gesamtmasse des Schwingungsdämpfers kann in diesem Fall bei ca. 20 kg liegen. Die Außenwände 2 bis 7 können eine einheitliche Materialstärke oder voneinander verschiedene Materialstärken aufweisen. Im Falle einer einheitlichen Materialstärke kann diese beispielsweise bei ca. 1 cm liegen.

Gemäß FIG 2 ist zumindest an der Innenseite der unteren Außenwand 2 ein Primärteil 8 eines elektrischen Linearantriebs befestigt. Beispielsweise kann das Primärteil 8 mit der unteren Außenwand 2 mittels Schrauben 9 (als gestrichelte Linien angedeutet) verschraubt sein. Das Primärteil 8 wird nachstehend zur Unterscheidung von einem später noch eingeführten weiteren Primärteil als unteres Primärteil 8 bezeichnet, weil es an der als untere Außenwand 2 bezeichneten Außenwand 2 angeordnet ist.

Oberhalb des unteren Primärteils 8 ist ein Sekundärteil 10 des elektrischen Antriebs angeordnet. Das Wort "oberhalb" bedeutet in diesem Zusammenhang, dass sich das Sekundärteil 10 zwischen dem unteren Primärteil 8 und der oberen Außenwand 3 befindet. Das untere Primärteil 8 wirkt auf das Sekundärteil 10.

Zum einen übt das untere Primärteil 8 auf das Sekundärteil 10 eine Anziehungskraft F1 aus. Das Primärteil 8 versucht also sozusagen, das Sekundärteil 10 an sich heranzuziehen. Die Anziehungskraft F1 ist vorzugsweise größer als die auf das Sekundärteil 10 wirkende Gewichtskraft FG. Die Anziehungskraft F1 ist - zumindest im Wesentlichen - unabhängig von einer Ansteuerung des unteren Primärteils 8. Zum anderen übt das untere Primärteil 8 auf das Sekundärteil 10 eine Schiebekraft F2 aus. Die Schiebekraft F2 wirkt in Richtung des in FIG 2 eingezeichneten Doppelpfeils 11. Durch sie kann das Sekundärteil 10 auf die linke Außenwand 6 oder auf die rechte Außenwand 7 zu ausgelenkt werden. Die Schiebekraft F2 ist sowohl bezüglich ihres Betrages als auch bezüglich ihres Vorzeichens davon abhängig, wie das Primärteil 8 angesteuert wird.

Die Anziehungskraft F1 wirkt immer auf das Primärteil 8 zu. Die Schiebekraft F2 wirkt immer in Richtung des Doppelpfeils 11, also orthogonal zur Anziehungskraft F1. Die Gewichtskraft FG wirkt stets von oben nach unten, also in Richtung der Schwerkraft. Wenn beispielsweise der aktive Schwingungsdämpfer so orientiert ist, wie dies in den FIG 1 und 2 dargestellt ist, wirkt die Gewichtskraft FG in die gleiche Richtung wie die Anziehungskraft F1. Wenn der Schwingungsdämpfer auf dem Kopf steht, dass also die obere Außenwand 3 nach unten zeigt, wirkt die Gewichtskraft FG entgegengesetzt zur Anziehungskraft F1. Wenn der Schwingungsdämpfer auf der Seite liegt, dass also die linke oder die rechte Außenwand 6, 7 nach unten zeigt, wirkt die Gewichtskraft FG in Richtung des Doppelpfeils 11. Wenn der Schwingungsdämpfer nach vorne oder hinten umgelegt ist, dass also die vordere oder die hintere Außenwand 4, 5 nach unten zeigt, wirkt die Gewichtskraft FG in einer Richtung, die sowohl orthogonal zur Anziehungskraft F1 als auch orthogonal zur Schiebekraft F2 gerichtet ist.

Die Gewichtskraft FG ist proportional zu der Masse des Sekundärteils 10. Die Masse des Sekundärteils 10 ist kleiner als die Gesamtmasse des Schwingungsdämpfers. Sie kann beispielsweise bei ca. der Hälfte der Gesamtmasse des Schwingungsdämpfers liegen. Wenn entsprechend obigem Beispiel die Gesamtmasse des Schwingungsdämpfers bei ca. 20 kg liegt, kann die Masse des Sekundärteils 10 beispielsweise bei ca. 9 kg liegen.

In vielen Fällen ist, wie in FIG 2 dargestellt, zusätzlich zu dem unteren Primärteil 8 ein weiteres Primärteil 12 vorhanden. Das weitere Primärteil 12 ist, sofern es vorhanden ist, an der Innenseite der oberen Außenwand 3 befestigt, beispielsweise über schematisch dargestellte Schrauben 13. Das weitere Primärteil 12 wird nachstehend als oberes Primärteil bezeichnet, weil es an der oberen Außenwand 3 befestigt ist. Falls das obere Primärteil 12 vorhanden ist, übt es analog zum unteren Primärteil 8 auf das Sekundärteil 10 eine Anziehungskraft F1' und eine Schiebekraft F2' aus. Die Anziehungskraft F1' ist - analog zur Anziehungskraft F1 des unteren Primärteils 8 - zumindest im Wesentlichen unabhängig von einer Ansteuerung des oberen Primärteils 12 und ist auf das obere Primärteil 12 zu gerichtet. Das untere und das obere Primärteil 8, 12 sind vorzugsweise derart aufeinander abgestimmt, dass die Anziehungskraft F1 des unteren Primärteils 8 größer als die Summe von Anziehungskraft F1' des oberen Primärteils 12 und der Gewichtskraft FG ist. Die Schiebekraft F2' des oberen Primärteils 12 wirkt analog zur Schiebekraft F2 des unteren Primärteils 8 in Richtung des Doppelpfeils 11. Sie ist - analog zur Schiebekraft F2 des unteren Primärteils 8 - abhängig von der Ansteuerung des oberen Primärteils 12. In aller Regel werden, sofern das obere Primärteil 12 vorhanden ist, beide Primärteile 8, 12 gleichartig angesteuert, so dass also die Schiebekräfte F2, F2' in die gleiche Richtung zeigen.

Um aufgrund der Schiebekraft F2 (bzw. der Schiebekräfte F2, F2') auch eine tatsächliche Auslenkung des Sekundärteils 10 zu erreichen, um also zu erreichen, dass das Sekundärteil 10 bei entsprechender Beaufschlagung des unteren Primärteils 8 (bzw. der Primärteile 8, 12) in Richtung des Doppelpfeils 11 verschoben wird, ist das Sekundärteil 10 über ein linkes und ein rechtes Halteelement 14, 15 beweglich gehalten. Die Halteelemente 14, 15 sind entsprechend der Darstellung von FIG 2 an der Innenseite der oberen Außenwand 3 befestigt. Genau genommen wird durch das Verschieben des Sekundärteils 10 aus seiner Mittellage daher auch eine leichte Bewegung vom unteren Primärteil 8 weg bewirkt. Diese Bewegung ist jedoch vernachlässigbar.

Die Halteelemente 13, 14 können beispielsweise entsprechend der Darstellung in FIG 2 als Bleche ausgebildet sein. Eine Materialstärke der Bleche ist in diesem Fall relativ gering. Vorzugsweise liegt sie bei 1 mm oder weniger, insbesondere unter 0,5 mm. Beispielsweise kann die Materialstärke bei ca. 0,3 mm liegen.

Sofern der Schwingungsdämpfer derart orientiert ist, dass die untere Außenwand 2 nach unten zeigt, stellt dies den völlig problemlosen Normalbetrieb des Schwingungsdämpfers dar. Sofern der Schwingungsdämpfer derart orientiert ist, dass die obere Außenwand 3 nach unten zeigt (der Schwingungsdämpfer also sozusagen auf dem Kopf steht), ist diese Art der Montage zwar ungewöhnlich, aber unkritisch, sofern die obenstehend erläuterte Dimensionierung des unteren Primärteils 8 bzw. der Primärteile 8, 12 beachtet wird. Denn dann übersteigt die Anziehungskraft F1 des unteren Primärteils 8 die Gewichtskraft FG bzw. die Summe von Gewichtskraft FG und Anziehungskraft F1'. Sofern der Schwingungsdämpfer derart orientiert ist, dass die linke oder die rechte Außenwand 6, 7 nach unten zeigen, ist auch diese Art der Montage unkritisch. Es muss bei der Ansteuerung des Primärteils 8 bzw. der Primärteile 8, 12 lediglich berücksichtigt werden, dass zusätzlich zu der zur Dämpfung der Schwingung benötigten Ansteuerung ein Offset zur Kompensation der Gewichtskraft FG erforderlich ist. Kritisch ist hingegen der Fall, dass die vordere oder die hintere Außenwand 4, 5 nach unten zeigen. Auch eine derartige Montage zu ermöglichen, ist Sinn und Zweck der vorliegenden Erfindung.

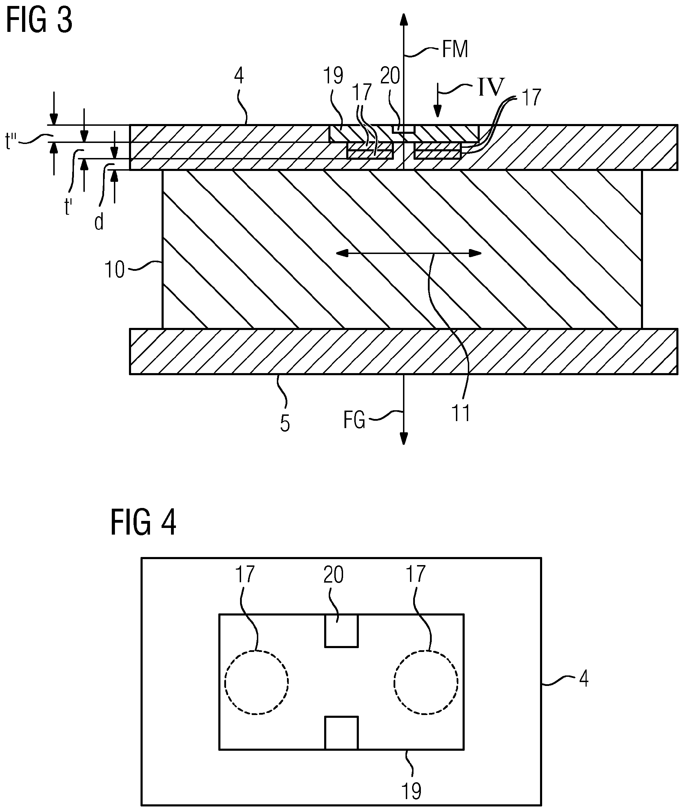

Nachfolgend wird in Verbindung mit den FIG 3 und 4 der Fall erläutert, dass der Schwingungsdämpfer derart orientiert ist, dass die hintere Außenwand 5 nach unten zeigt. Falls umgekehrt die vordere Außenwand 4 nach unten zeigen sollte, gelten analoge Ausführungen.

Entsprechend der Darstellung der FIG 3 und 4 zeigt also die hintere Außenwand 5 nach unten und demzufolge die vordere Außenwand 4 nach oben. Die Gewichtskraft FG des Sekundärteils 10 ist also sowohl orthogonal zum Doppelpfeil 11 als auch orthogonal zur Anziehungskraft F1 bzw. zu den Anziehungskräften F1, F1' gerichtet, und zwar auf die hintere Außenwand 5 zu.

Entsprechend der Darstellung in den FIG 3 und 4 ist in die vordere Außenwand 4 auf Höhe des Sekundärteils 10 eine Anzahl von Aufnahmen 16 eingebracht. Minimal ist eine einzige Aufnahme 16 vorhanden. In der Regel sind jedoch mehrere Aufnahmen 16 vorhanden, insbesondere typischerweise zwei Aufnahmen 16. In die Aufnahmen 16 sind Permanentmagnete 17 eingebracht. Die Aufnahmen 16 sind in FIG 1 der Übersichtlichkeit halber nicht mit dargestellt.

Die Aufnahmen 16 sind entsprechend der Darstellung insbesondere in FIG 3 in die Außenseite der vorderen Außenwand 4 eingebracht. Die Aufnahmen 16 sind weiterhin topfartig ausgebildet, so dass also im Bereich der Topfböden eine Materialstärke verbleibt. Insbesondere können die Aufnahmen 16 als Topfbohrungen ausgebildet sein. In diesem Fall weisen die Aufnahmen 16 einen runden Querschnitt auf, insbesondere einen kreisrunden Querschnitt. Die Aufnahmen 16 können aber auch einen anderen Querschnitt aufweisen, beispielsweise einen elliptischen Querschnitt, einen rechteckigen Querschnitt oder einen sechseckigen Querschnitt. Entscheidend ist, dass die Aufnahmen 16 einen geschlossenen Topfboden aufweisen, also die vordere Außenwand 4 nicht durchstoßen. Die verbleibende Materialstärke d kann nach Bedarf bestimmt sein. Beispielsweise kann sie bei 1 mm bis 2 mm liegen, insbesondere bei ca. 1,5 mm. Ebenso kann - im Falle von Topfbohrungen - ein Durchmesser D der Topfbohrungen geeignet bestimmt sein. Beispielsweise kann der Durchmesser D bei ca. 25 mm liegen. Ebenso kann eine Tiefe t' der Aufnahmen 16 geeignet bestimmt sein. Beispielsweise kann sie bei ca. 5 mm liegen.

Weiterhin ist in die vordere Außenwand 4 auf Höhe des Sekundärteils 10 eine weitere Aufnahme 18 eingebracht. Auch die Aufnahme 18 ist in die Außenseite der vorderen Außenwand 4 eingebracht. In die weitere Aufnahme 18 ist ein magnetisches Rückschlussjoch 19 eingebracht. Mittels des Rückschlussjochs 19 wird der magnetische Kreis geschlossen, der im übrigen von den Permanentmagneten 17 und des Sekundärteils 10 gebildet wird. Die Ausnehmung 18 für das Rückschlussjoch 19 ist vorzugsweise entsprechend der Darstellung in den FIG 3 und 4 von innen nach außen gesehen außerhalb der Aufnahmen 16 für die Permanentmagnete 17 angeordnet. Die Aufnahmen 18 sind in FIG 1 - ebenso wie die Aufnahmen 16 - der Übersichtlichkeit halber nicht mit dargestellt.

Die weitere Aufnahme 18 kann beispielsweise eine Tiefe t" von 3 mm bis 4 mm aufweisen, insbesondere von ca. 3,5 mm. In Verbindung mit der obenstehend erwähnten Materialstärke der Außenwände 2 bis 7 und der Tiefe t' der Aufnahmen 16 für die Permanentmagnete 17 ergibt die Tiefe t" der weiteren Aufnahme 18 die gewünschte verbleibende Materialstärke d.

Aufgrund des geschlossenen magnetischen Kreises üben die Permanentmagnete 17 eine magnetische Anziehungskraft FM auf das Sekundärteil 10 aus. Die magnetische Anziehungskraft FM ist derart bestimmt, dass sie die Gewichtskraft FG des Sekundärteils 10 so gut wie möglich kompensiert. Je exakter die Kompensation ist, desto besser. Um eine exakte Kompensation zu erreichen, kann eine resultierende Magnetfeldstärke des von dem Sekundärteil 10, den Permanentmagneten 17 und dem Rückschlussjoch 19 gebildeten Magnetkreises durch das Rückschlussjoch 19 begrenzt werden. In diesem Fall ist die magnetische Anziehungskraft FM unverändert dieselbe, auch wenn etwas stärkere oder etwas schwächere Permanentmagnete 17 verwendet werden. Auch ist in diesem Fall die magnetische Anziehungskraft FM innerhalb gewisser Grenzen unabhängig davon, ob das Sekundärteil 10 einen etwas größeren oder etwas geringeren Abstand von der Innenseite der vorderen Außenwand 4 aufweist.

Um eine derartige Konstanz der magnetischen Anziehungskraft FM zu erreichen, weist vorzugsweise das Rückschlussjoch 19 einen verjüngten Bereich 20 auf, also einen Bereich, der gegenüber dem verbleibenden Rückschlussjoch 18 einen reduzierten Querschnitt aufweist. In diesem Fall kann der Querschnitt des verjüngten Bereichs 20 entsprechend dimensioniert sein, so dass der magnetische Kreis in dem verjüngten Bereich 20 in die Sättigung kommt.

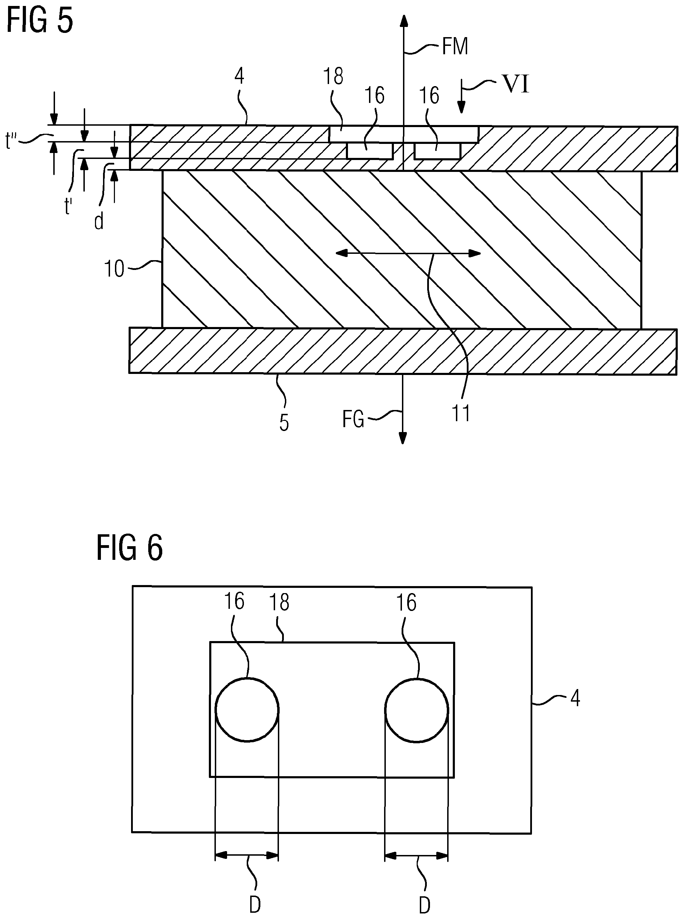

Die Permanentmagnete 17 und das Rückschlussjoch 19 müssen nicht in jedem Fall vorhanden sein. Insbesondere müssen sie nur dann vorhanden sein, wenn der Schwingungsdämpfer derart angeordnet werden soll, dass die hintere Außenwand 5 nach unten zeigt. Im Falle einer anderen Orientierung des Schwingungsdämpfers sind somit entsprechend der Darstellung in den FIG 5 und 6 zwar die Aufnahmen 16, 18 vorhanden, in den Aufnahmen 16, 18 sind aber die Permanentmagnete 17 und das Rückschlussjoch 19 nicht angeordnet. In diesem Fall können die Aufnahmen 16, 18 beispielsweise sichtbar bleiben oder mit einer Abdeckung oder einem magnetisch nicht aktiven Füllelement versehen werden.

Wie bereits erwähnt, sind analoge Ausgestaltungen für den Fall möglich, dass der Schwingungsdämpfer derart orientiert werden soll, dass die vordere Außenwand 4 nach unten zeigt und demzufolge die hintere Außenwand 5 nach oben zeigt. Diese Ausgestaltungen können, soweit es die Aufnahmen 16, 18 betrifft, nach Bedarf alternativ oder zusätzlich realisiert werden. Soweit es die Permanentmagnete 17 und das Rückschlussjoch 19 betrifft, sind diese Elemente - bei entsprechender Orientierung des Schwingungsdämpfers - entweder überhaupt nicht vorhanden oder alternativ in der vorderen oder der hinteren Außenwand 4, 5 angeordnet.

Bisher wurden Ausgestaltungen erläutert, bei denen eine der Außenwände 2 bis 7 direkt nach unten gerichtet ist, so dass also vier der sechs Außenwände 2 bis 7 vertikal verlaufen und die beiden verbleibenden Außenwände 2 bis 7 horizontal orientiert sind. Bei geeigneter Auslegung der Permanentmagnete 17 und des Rückschlussjochs 19 ist es jedoch sogar möglich, den Schwingungsdämpfer derart zu orientieren, dass vier oder sogar alle sechs Außenwände 2 bis 7 mit der Vertikalen einen Winkel bilden, der sowohl von 0° als auch von 90° verschieden ist. In diesem Fall muss lediglich insbesondere der verjüngte Bereich 20 des Rückschlussjochs 19 entsprechend ausgelegt sein. Gegebenenfalls können verschiedene Rückschlussjoche 19 für verschiedene Orientierungen bereitgestellt werden, so dass - je nach Orientierung - das geeignete Rückschlussjoch 19 verwendet werden kann.

Zusammengefasst betrifft die vorliegende Erfindung somit folgenden Sachverhalt:
Ein aktiver Schwingungsdämpfer weist ein im Wesentlichen quaderförmiges Gehäuse 1 auf, so dass das Gehäuse 1, wenn es mit einer unteren Außenwand 2 auf dem Boden aufsteht, zusätzlich eine obere Außenwand 3, eine vordere und eine hintere Außenwand 4, 5 sowie eine linke und eine rechte Außenwand 6, 7 aufweist. Zumindest an der Innenseite der unteren Außenwand 2 ist ein Primärteil 8 eines elektrischen Linearantriebs befestigt. Das Primärteil 8 wirkt auf ein oberhalb des Primärteils 8 angeordnetes Sekundärteil 10 des elektrischen Linearantriebs. Das Sekundärteil 10 ist links und rechts über je ein an der Innenseite der oberen Außenwand 3 befestigtes Halteelement 14, 15 beweglich gehalten, so dass das Sekundärteil 10 bei entsprechender Beaufschlagung des Primärteils 8 in links-rechts-Richtung im Wesentlichen linear verschiebbar ist. In die vordere Außenwand 4 und/oder in die hintere Außenwand 5 sind auf Höhe des Sekundärteils 10 eine Anzahl von Aufnahmen 16 für Permanentmagnete 17 und weiterhin eine Aufnahme 18 für ein magnetisches Rückschlussjoch 19 eingebracht. Die Aufnahmen 16, 18 sind in die Außenseite der vorderen und/oder der hinteren Außenwand 4, 5 eingebracht. Die Aufnahmen 16 für die Permanentmagnete 17 sind topfartig ausgebildet, so dass die entsprechende Außenwand 4, 5 trotz der Aufnahmen 16 für die Permanentmagnete 17 als geschlossene Außenwand erhalten bleibt.

Die vorliegende Erfindung weist viele Vorteile auf. Insbesondere kann der Schwingungsdämpfer in jeder seiner Basisorientierungen (das heißt eine der Außenwände 2 bis 7 zeigt nach unten) an einer Maschine montiert werden und dort seine Funktion erfüllen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Aktiver Schwingungsdämpfer,
- wobei der Schwingungsdämpfer ein im Wesentlichen quaderförmiges Gehäuse (1) aufweist, so dass das Gehäuse (1), wenn es mit einer unteren Außenwand (2) auf dem Boden aufsteht, zusätzlich eine obere Außenwand (3), eine vordere und eine hintere Außenwand (4, 5) sowie eine linke und eine rechte Außenwand (6, 7) aufweist,
- wobei zumindest an der Innenseite der unteren Außenwand (2) ein Primärteil (8) eines elektrischen Linearantriebs befestigt ist,
- wobei das Primärteil (8) auf ein oberhalb des Primärteils (8) angeordnetes Sekundärteil (10) des elektrischen Linearantriebs wirkt,
- wobei das Sekundärteil (10) über ein linkes und ein rechtes, an der Innenseite der oberen Außenwand (3) befestigtes Halteelement (14, 15) beweglich gehalten ist, so dass das Sekundärteil (10) bei entsprechender Beaufschlagung des Primärteils (8) in links-rechts-Richtung im Wesentlichen linear verschiebbar ist,
- wobei in die vordere Außenwand (4) und/oder in die hintere Außenwand (5) auf Höhe des Sekundärteils (10) eine Anzahl von Aufnahmen (16) für Permanentmagnete (17) und weiterhin eine Aufnahme (18) für ein magnetisches Rückschlussjoch (19) eingebracht sind,
- wobei die Aufnahmen (16) für die Permanentmagnete (17) und die Aufnahme (18) für das magnetische Rückschlussjoch (19) in die Außenseite der vorderen Außenwand (4) und/oder in die Außenseite der hinteren Außenwand (5) eingebracht sind,
**dadurch gekennzeichnet,**
**dass** die Aufnahmen (16) für die Permanentmagnete (17) topfartig ausgebildet sind, insbesondere als Topfbohrungen, so dass die entsprechende Außenwand (4, 5) trotz der Aufnahmen (16) für die Permanentmagnete (17) als geschlossene Außenwand erhalten bleibt.

2. Schwingungsdämpfer nach Anspruch 1,
**dadurch gekennzeichnet,**
**dass** die Ausnehmung (18) für das Rückschlussjoch (19) von innen nach außen gesehen außerhalb der Aufnahmen (16) für die Permanentmagnete (17) angeordnet ist.

3. Schwingungsdämpfer nach Anspruch 1 oder 2,
**dadurch gekennzeichnet,**
**dass** die Permanentmagnete (17) und das Rückschlussjoch (19) in die jeweiligen Aufnahmen (16, 18) der vorderen oder der hinteren Seitenwand 4, 5) eingebracht sind und dass eine resultierende Magnetfeldstärke des von dem Sekundärteil (10), den Permanentmagneten (17) und dem Rückschlussjoch (19) gebildeten Magnetkreises durch das Rückschlussjoch (19) begrenzt wird.

4. Schwingungsdämpfer nach Anspruch 3,
**dadurch gekennzeichnet,**
**dass** das Rückschlussjoch (19) einen Bereich (20) mit einem gegenüber dem verbleibenden Rückschlussjoch (19) reduzierten Querschnitt aufweist und dass der reduzierte Querschnitt die resultierende Magnetfeldstärke begrenzt.

## Claims

1. Active vibration damper,
- wherein the vibration damper has a substantially cuboid housing (1), such that the housing (1), when positioned with a lower outer wall (2) on the floor, additionally has an upper outer wall (3), a front and a rear outer wall (4, 5) and a left and a right outer wall (6, 7),
- wherein a primary part (8) of an electrical linear actuator is fixed at least on the inside of the lower outer wall (2),
- wherein the primary part (8) acts on a secondary part (10) of the electrical linear actuator, arranged above the primary part (8),
- wherein the secondary part (10) is movably held via a left and a right retaining element (14, 15), fixed to the inside of the upper outer wall (3), such that the secondary part (10) is displaceable in a substantially linear manner when the primary part (8) is correspondingly impinged on in the left-right direction,
- wherein a number of receptacles (16) for permanent magnets (17) and, furthermore, a receptacle (18) for a magnetic back iron yoke (19) are introduced into the front outer wall (4) and/or into the rear outer wall (5) at the height of the secondary part (10),
- wherein the receptacles (16) for the permanent magnets (17) and the receptacle (18) for the magnetic back iron yoke (19) are introduced into the outside of the front outer wall (4) and/or into the outside of the rear outer wall (5),
**characterised in that**
the receptacles (16) for the permanent magnets (17) are designed in a pot-like manner, in particular as pot boreholes, such that the corresponding outer wall (4, 5) is retained as a closed outer wall despite the receptacles (16) for the permanent magnets (17).

2. Vibration damper according to claim 1,
**characterised in that**
the recess (18) for the back iron yoke (19), viewed from the inside out, is arranged outside the receptacles (16) for the permanent magnets (17).

3. Vibration damper according to claim 1 or 2,
**characterised in that**
the permanent magnets (17) and the back iron yoke (19) are introduced into the respective receptacles (16, 18) of the front or the rear side wall (4, 5) and that a resulting magnetic field strength of the magnetic circuit formed by the secondary part (10), the permanent magnets (17) and the back iron yoke (19) is limited by the back iron yoke (19).

4. Vibration damper according to claim 3,
**characterised in that**
the back iron yoke (19) has a region (20) with a reduced cross-section compared to the remaining back iron yoke (19) and that the reduced cross-section limits the resulting magnetic field strength.

## Revendications

1. Amortisseur actif de vibrations,
- dans lequel l'amortisseur de vibrations a un boîtier (1) sensiblement parallélépipédique, de sorte que le boîtier (1), lorsqu'il repose sur le sol par une paroi (2) extérieure inférieure, a, en plus d'une paroi (3) extérieure supérieure, une paroi (4, 5) extérieure avant et arrière, ainsi qu'une paroi (6, 7) extérieure gauche et droite,
- dans lequel une partie (8) primaire d'un entraînement électrique linéaire est fixé au moins sur la face intérieure de la paroi (2) extérieure inférieure,
- dans lequel la partie (8) primaire agit sur une partie (10) secondaire de l'entraînement électrique linéaire disposée au-dessus de la partie (8) primaire,
- dans lequel la partie (10) secondaire est maintenue mobile par un élément (14, 15) de maintien à gauche et à droite fixé sur la face intérieure de la paroi (3) extérieure supérieure, de manière à pouvoir déplacer sensiblement linéairement, dans la direction de gauche à droite, la partie (10) secondaire lorsque la partie (8) primaire est alimentée d'une manière correspondante,
- dans lequel, dans la paroi (4) extérieure avant et/ou dans la paroi (5) extérieure arrière sont ménagés au niveau de la partie (10) secondaire un certain nombre de logements (16) pour des aimants (17) permanents, et en outre un logement (18) pour une culasse (19) magnétique de reflux,
- dans lequel les logements (16) pour les aimants (17) permanents et le logement (18) pour la culasse (19) magnétique de reflux sont ménagés dans la face extérieure de la paroi (4) extérieure avant et/ou dans la face extérieure de la paroi (5) extérieure arrière,
**caractérisé en ce que**
les logements (16) pour les aimants (17) permanents sont constitués à la manière de cuvette, notamment de trous en cuvette, de manière à ce que la paroi (4, 5) extérieure correspondante reste, en dépit des logements (16) pour les aimants (17) permanents, conservée sous la forme d'une paroi extérieure fermée.

2. Amortisseur de vibrations suivant la revendication 1, **caractérisé en ce que**
l'évidement (18) pour la culasse (19) de reflux est disposé, considéré de l'intérieur à l'extérieur, en dehors des logements (16) pour les aimants (17) permanents.

3. Amortisseur de vibrations suivant la revendication 1 ou 2, **caractérisé en ce que**
les éléments (17) permanents et la culasse (19) de reflux sont logés dans les logements (16, 18) respectifs de la paroi (4, 5) latérale avant ou arrière et **en ce qu'**une intensité, qui s'en suit, de champ magnétique du circuit magnétique formé de la partie (10) secondaire, des aimants (17) permanents et de la culasse (19) de reflux, soit limitée par la culasse (19) de reflux.

4. Amortisseur de vibrations suivant la revendication 3, **caractérisé en ce que**
la culasse (19) de reflux a une partie (20) ayant une section transversale réduite par rapport au reste de la culasse (19) de reflux et **en ce que** la section transversale réduite limite l'intensité, qui s'ensuit, du champ magnétique.
